# EUROPÄISCHE PATENTSCHRIFT

(11) **EP 3 641 993 B1**
(45) Veröffentlichungstag und Bekanntmachung des Hinweises auf die Patenterteilung: **14.12.2022**
(21) Anmeldenummer: 18734132.6
(22) Anmeldetag: 15.06.2018
(51) Int. Cl.: B25J 13/08, B25J 15/02

(54) **GREIFER MIT EINEM SENSOR AN EINEM GETRIEBEGLIEDLAGER DES GREIFERS**
GRIPPER HAVING A SENSOR ON A TRANSMISSION MEMBER BEARING OF THE GRIPPER
SYSTÈME DE PRÉHENSION COMPRENANT UN CAPTEUR SUR UN PALIER D'ÉLÉMENT DE TRANSMISSION DU SYSTÈME DE PRÉHENSION

(30) Priorität: 19.06.2017 DE 102017210213
(43) Veröffentlichungstag der Anmeldung: 29.04.2020
(73) Patentinhaber: KUKA Deutschland GmbH, 86165 Augsburg (DE)
(72) Erfinder: BRUDNIOK, Sven, 86853 Langerringen (DE)
(74) Vertreter: Oelke, Jochen
(86) Internationale Anmeldenummer: PCT/EP2018/065920
(87) Internationale Veröffentlichungsnummer: WO 2018/234170

(56) Entgegenhaltungen:
- EP-A2- 0 237 336
- US-A- 4 600 357
- US-A- 5 012 591
- US-A1- 2014 028 118

## Beschreibung

Die Erfindung betrifft einen Greifer, aufweisend einen Greifergrundkörper, wenigstens einen bezüglich des Greifergrundkörpers mittels einer Greiffingerlagerung verstellbar gelagerten ersten Greiferfinger und wenigstens einen mit dem ersten Greiferfinger zusammenwirkenden zweiten Greiferfinger, sowie ein motorisch antreibbares Getriebe, das ausgebildet ist, den wenigstens einen mittels der Greiffingerlagerung verstellbar gelagerten ersten Greiferfinger relativ zum Greifergrundkörper und relativ zu dem wenigstens einen zweiten Greiferfinger zu verstellen, derart, dass durch die Bewegung des ersten Greiferfingers eine Klemmkraft erzeugbar ist, durch welche ein Gegenstand von dem Greifer klemmend gehalten werden kann.

Aus der WO 2008/083995 A1 ist eine Vorrichtung zur Qualitätskontrolle eines rotationssymmetrischen Körpers bekannt, wobei die Vorrichtung ein Handhabungssystem mit einem Greifer zum Greifen des Körpers und zum Transportieren des Körpers in eine Arbeitsposition, sowie mindestens eine elektronische Kamera zum optischen Abtasten des Körpers in der Arbeitsposition aufweist, wobei der Greifer des Handhabungssystems Greiffinger mit rotationssymmetrischen Halteelementen zum Festhalten des Körpers aufweist, wobei die Halteelemente um ihre Rotationsachsen rotierbar ausgebildet sind. Die Halteelemente der Greiffinger des Greifers sind dabei jeweils mit einem Zahnrad drehfest verbunden, wobei die Zahnräder aller Greiffinger des Greifers mittelbar über mindestens ein weiteres Zahnrad mit einem zentralen Zahnrad des Greifers in Eingriff stehen, und der Greifer einen Antriebsmechanismus aufweist, welcher das zentrale Zahnrad in eine Rotationsbewegung versetzt.

Aus der EP 2 660 015 B1 ist ein Greifer zum Manipulieren von, insbesondere röhrchenförmigen, Probengefäßen bekannt, mit einer Greiferbasis, wenigstens zwei je einen Halteabschnitt zum Erfassen eines Probengefäßes aufweisenden, jeweils um eine Fingerrotationsachse relativ zu der Greiferbasis verdrehbar an der Greiferbasis angeordneten Greiferfingern, wobei die Halteabschnitte der Greiferfinger jeweils in Bezug auf die zugeordnete Fingerrotationsachse azentrisch angeordnet sind, und mit einem ersten Antrieb zum Verdrehen der Greiferfinger, wobei die Greiferfinger derart miteinander gekoppelt sind, dass sie von dem Antrieb gleichzeitig und mit jeweils gleicher Rotationsgeschwindigkeit und -richtung angetrieben werden, wobei die Greiferbasis an einem Grundkörper und relativ zu diesem um eine von den Fingerrotationsachsen verschiedene Basisrotationsachse drehbar angeordnet ist, dass ein zweiter Antrieb zum Verdrehen der Greiferbasis relativ zu dem Grundkörper vorgesehen ist und dass eine Steuereinrichtung vorgesehen ist zum Steuern der Antriebe derart, dass durch eine Bewegungskombination aus Verdrehen der Greiferfinger relativ zu der Greiferbasis und Verdrehen der Greiferbasis relativ zu dem Grundkörper für jeden der Halteabschnitte der Greiferfinger jeweils eine im Wesentlichen lineare Bewegung relativ zu dem Grundkörper resultiert.

US 4 600 357 A offenbart einen Greifer mit Kraftsensor am Getriebe, welcher jedoch nicht ausgebildet ist, allein die in Ausrichtung der Klemmkraft (K) wirkende Getriebelagerreaktionskraft (R) aufzunehmen.

Aufgabe der Erfindung ist es, einen Greifer mit einem integrierten Sensor zu schaffen, der die Klemmkraft des Greifers abseits der Greiferfinger aufnimmt. Aufgabengemäß soll der Sensor also separat, d.h. getrennt von den Greiferfingern angeordnet sein und dennoch die Klemmkraft des Greifers präzise erfassen können.

Diese Aufgabe wird erfindungsgemäß gelöst durch einen Greifer, aufweisend einen Greifergrundkörper, wenigstens einen bezüglich des Greifergrundkörpers mittels einer Greiffingerlagerung verstellbar gelagerten ersten Greiferfinger und wenigstens einen mit dem ersten Greiferfinger zusammenwirkenden zweiten Greiferfinger, sowie ein motorisch antreibbares Getriebe, das ausgebildet ist, den wenigstens einen mittels der Greiffingerlagerung verstellbar gelagerten ersten Greiferfinger relativ zum Greifergrundkörper und relativ zu dem wenigstens einen zweiten Greiferfinger zu verstellen, derart, dass durch die Bewegung des ersten Greiferfingers eine Klemmkraft erzeugbar ist, durch welche ein Gegenstand von dem Greifer klemmend gehalten werden kann, wobei das Getriebe ein erstes Getriebeglied aufweist, das mit dem ersten Greiferfinger verbunden ist und ein zweites Getriebeglied aufweist, das an dem Greifergrundkörper gelagert ist und zwar mittels einer von der Greiffingerlagerung separaten Getriebegliedlageranordnung, welche ein erstes Getriebegliedlager aufweist, das ausgebildet ist, allein die in Ausrichtung der Klemmkraft wirkende Getriebelagerreaktionskraft separat aufzunehmen, wobei der Getriebegliedlageranordnung ein Sensor zugeordnet ist, der ausgebildet ist, die Getriebelagerreaktionskraft zu erfassen.

Aufgrund der oben näher beschriebenen Verstellbarkeit des wenigstens einen ersten Greiferfingers relativ zu dem wenigstens einen zweiten Greiferfinger kann durch die Bewegung des ersten Greiferfingers eine Klemmkraft erzeugt werden, und zwar bevorzugt aufgrund einer mit der Bewegung in Verbindung stehende oder mit der Bewegung zusammenhängende Antriebskraft, die beispielsweise von einem Motor des Greifers erzeugbar ist.

Mit dem erfindungsgemäßen Sensor kann die Klemmkraft gemessen werden, die zwischen dem ersten Greiferfinger und dem zweiten Greiferfinger anliegt, unabhängig davon, wo die Greiferfinger das Greifobjekt berühren und unabhängig davon welche Form und welche Länge die Greiferfinger aufweisen. Der erfindungsgemäße Sensor erfasst demgemäß ganz allgemein ausgedrückt eine physikalische Eigenschaft in der Lagerung, die einen Rückschluss auf die Höhe der Lagerreaktionskraft zulässt, die nach dem Ursache-Wirkung-Prinzip insoweit der Klemmkraft entspricht.

In einer speziellen Ausführungsform weist das Getriebe ein erstes Getriebeglied auf, das mit dem ersten Greiferfinger verbunden ist und ein zweites Getriebeglied aufweist, das an dem Greifergrundkörper gelagert ist und zwar mittels einer von der Greiffingerlagerung separaten Getriebegliedlageranordnung, welche ein erstes Getriebegliedlager aufweist, das ausgebildet ist, allein die in Ausrichtung der Klemmkraft wirkende Getriebelagerreaktionskraft separat aufzunehmen, wobei dem ersten Getriebegliedlager ein Sensor zugeordnet ist, der ausgebildet ist, die Getriebelagerreaktionskraft zu erfassen.

Der Greifergrundkörper bildet insoweit einen Träger oder ein Gehäuse an dem die Greiferfinger des Greifers, je nach Ausführung, beweglich gelagert oder starr befestigt sind. Eine verstellbare Lagerung des wenigstens einen ersten Greiferfingers, der insoweit eine Greiferbacke des Greifers bildet, kann mittels Drehlager und/oder Linearlager erfolgen. es sind mindestens zwei Greiferfinger erforderlich, von denen wenigstens einer beweglich gelagert ist. Im Falle eines Greifers mit zwei Greiferfingern kann beispielsweise ein erster Greiferfinger derart verstellbar gelagert sein, dass er auf einen zweiten Greiferfinger, der starr an dem Greifergrundkörper befestigt ist, zum Schließen der beiden Greiferfinger zu bewegt werden kann und zum Öffnen der beiden Greiferfinger von diesem wegbewegt werden kann. Zwischen den beiden Greiferfingern kann dann ein Objekt eingeklemmt festgehalten werden. In einer alternativen Ausführungsform können beide oder alle Greiferfinger verstellbar gelagert sein. So können im Falle eines solchen Greifers beispielsweise zwei Greiferfinger vorgesehen sein, von denen jeder einzelne Greiferfinger jeweils für sich verstellbar gelagert ist. Es können dann beide Greiferfinger aufeinander zu oder voneinander weg bewegt werden.

Mittels der Greiferfingerlagerung ist der wenigstens eine erste Greiferfinger oder sind die wenigstens zwei Greiferfinger entsprechend verstellbar bezüglich des Greifergrundkörpers am Greifer gelagert. Separat von der Greiferfingerlagerung erfolgt der jeweilige Antrieb des entsprechend beweglichen Greiferfingers über ein Getriebe des Greifers.

Das Getriebe kann zwei oder mehr Getriebeelemente, d.h. Zahnräder, Zahnstangen, Riemenscheiben, Koppelstangen oder andere der Getriebeart entsprechende Getriebeelemente umfassen, die zur Bildung der Getriebefunktion entsprechend ineinandergreifen und somit Getriebeglieder bilden. Jedes Getriebeglied kann seiner Funktion im Getriebe entsprechend mittels einer gemeinsamen oder eigenen Getriebegliedlagerung bezüglich des Greifergrundkörpers gelagert sein.

Indem das Getriebe ein erstes Getriebeglied aufweist, das mit dem ersten Greiferfinger verbunden ist und ein zweites Getriebeglied aufweist, das an dem Greifergrundkörper gelagert ist und zwar mittels einer von der Greiffingerlagerung separaten Getriebegliedlageranordnung, welche ein erstes Getriebegliedlager aufweist, das ausgebildet ist, allein die in Ausrichtung der Klemmkraft wirkende Getriebelagerreaktionskraft separat aufzunehmen, wobei diesem ersten Getriebegliedlager ein Sensor zugeordnet ist, der ausgebildet ist, die Getriebelagerreaktionskraft zu erfassen, wird ein Greifer mit einem integrierten Sensor geschaffen, der die Klemmkraft des Greifers abseits der Greiferfinger aufnimmt. Der Sensor ist demgemäß separat, d.h. getrennt von den Greiferfingern angeordnet und kann dennoch die Klemmkraft des Greifers präzise erfassen.

Um ein sicheres Greifen eines Objekts mit einem Greifer eines Roboters, z.B. eines Zweibackengreifers zu gewährleisten, sollte sichergestellt sein, dass die Greifkraft, d.h. eine Klemmgraft auch bei einer Unterbrechung der Energieversorgung des Greifers erhalten bleibt. Hierfür werden bisher insbesondere zwei Methoden eingesetzt.

Die eine Methode sieht antriebsseitig am Greiferverstell-Motor des Greifers eine Bremse vor, die im unbestromten Zustand geschlossen ist. Diese Lösung hat zur Folge, dass der Greifer im Betrieb die Greifkraft nur durch eine Energiezufuhr aufrechterhalten kann. Über die Messung der jeweiligen Stromstärke kann zwar auf die Greifkraft, d.h. die Klemmkraft rückgeschlossen werden. Nachteil dieser Lösung ist jedoch die zusätzlich benötigte Bremse am Motor und das ständige bestromen des Motors, um die Klemmkraft aufrecht zu erhalten, da dies einen erhöhten Energieverbrauch zur Folge hat und auch zu einem thermischen Problem führen kann.

Die zweite Methode enthält im Antriebsstrang zwischen dem Motor und den Greiferfingern am Abtrieb ein oder mehrere Systemelemente im Antriebsstrang, die nicht rücktreibbar sind. Dies hat zur Folge, dass die Greiferfinger nach einem Stromausfall nicht durch externe Kräfte gelöst werden können und dass für die Aufrechterhaltung der Greifkraft im Betrieb der Greifer nicht bestromt werden muss. Eine Kraftmessung über eine Strommessung liefert nur ein Ergebnis über die Schließkraft beim Schließen der Backen am Greifobjekt, nicht aber über die Klemmkraft im Betrieb, wenn z.B. der Geifer mit dem Greifobjekt vom Roboter bewegt wird, da ein Feedback über die Greifkraft aufgrund der Selbsthemmung des Antriebsstrangs nicht von dem Greifbacken zu dem Motor zurückgeleitet wird. Weiterhin ist die Greifkraft beim Schließen der Backen nicht nur vom Strom mit dem der Motor betrieben wird abhängig, sondern auch vom Impuls mit dem die Backen geschlossen werden. Für eine Kraftmessung wird in solchen Greifern eine Messung in den Greiferfingern bevorzugt, die eine Verformung aufgrund der Klemmkraft erfahren. Dies hat zur Folge, dass sämtliche Kräfte und Momente, die am Finger anliegen, über den Sensor zur Fingerbasis geleitet werden und dass alle Belastungen, die nicht der zu messenden Klemmkraft entsprechen als Störkräfte und Störmomente das Messergebnis beeinflussen können. Diese Art der Kraftmessung weist weiterhin eine Abhängigkeit zum Ort der Kraftaufnahme auf, da sich z.B. die Störmomente aufgrund des veränderlichen Hebelarms zwischen Berührpunkt des Fingers mit dem Greifobjekt und der Messstelle stark verändern können. Daher ist ein Messprinzip zu bevorzugen, in dem der Sensor von allen Störkräften und - momenten entkoppelt ist und damit nur die zu messende Kraft erfasst und damit unabhängig von z.B. der Länge der Finger und damit dem Hebelarm ist.

Eine Messung im Antriebsstrang ist mit großem Aufwand verbunden, da sich dessen Antriebselemente bewegen und dies beispielsweise von den überbrückenden elektrischen Anschlüssen kompensiert werden muss.

Es wird deshalb ein einfacher Antriebsstrang vorgeschlagen, der nicht rücktreibbar ist und bei dem ohne zusätzliche Bremse die Greifkraft aufrechterhalten werden kann. In diesem Fall kann eine Kraftmessung über den Strom nur eine Aussage zu der Kraft beim Schließen machen, wenn die Schließgeschwindigkeit und die Bewegte Masse bekannt sind, aber nicht mehr zu der Klemmkraft, wenn der Antriebsmotor über das Selbsthalten entkoppelt ist. Die Kraftmessung soll nicht durch die Eigenschaft des Antriebsstrangs beeinflusst werden, dass er nicht rücktreibbar ist. Wenn es sich um einen Greifer handelt, bei dem die Greiferbacken linear angetrieben werden, soll die Kraftmessung nicht durch den Ort beeinflusst werden, an dem die Backen das Greifobjekt berühren. Wenn es sich um einen Greifer handelt, bei dem die Greiferbacken rotatorisch angetrieben werden, soll die Messung des Klemmmoments nicht durch den Ort beeinflusst werden, an dem die Backen das Greifobjekt berühren. Weiterhin soll sich die Messstelle möglichst nicht bewegen, um eine elektrische Kontaktierung zu vereinfachen.

Damit die Kraftmessung unabhängig wird von der Selbsthemmung des Antriebsstrangs, wird vorgeschlagen, dass die Kraftmessung an einem Teil des Antriebsstrangs erfolgen soll, das sich im Antriebsstrang an den Teilen befindet, mit welchen sich die Segmente des Antriebsstrangs, welche die Selbsthemmung bewirken, am Grundkörper zur Aufbringung der Reaktionskraft abstützen, die der Klemmkraft entspricht.

Eine Kraftmessung in den Fingern des Greifers scheidet dadurch aus, dass sie eine Abhängigkeit zum Ort hat, an dem die Kraft aufgebracht wird und weil sich die Finger bewegen und dies von einem dann benötigten elektrischen Anschluss überbrückt werden müsste.

Eine Kraftmessung durch eine Messung der Verformung des bewegten Antriebsstrangs scheidet aus, da sich der Antriebsstrang z.B. rotatorisch bewegt und diese Bewegung vom elektrischen Anschluss überbrückt werden müsste.

Als Messort wird somit erfindungsgemäß vorgeschlagen, an einer Stelle zu messen, an der sich der Antriebsstrang im Gehäuse abstützt. Damit dies möglich wird, darf die Leitung der Antriebskraft nicht so verlaufen, dass sich die Klemmkräfte der sich gegenüberliegenden Greiferfinger gegenseitig kompensieren und somit keine Abstützung als Gegenkraft benötigen. Der Antriebsstrang an dem gemessen wird treibt daher einen einzelnen Greiferfinger an. Wenn mehr als ein Greiferfinger angetrieben wird, sind mehrere Antriebsstränge vorzusehen, die ggf. jedoch auch von einem gemeinsamen Motor angetrieben werden können. Es besteht auch die Möglichkeit, dass nur ein Greiferfinger angetrieben wird und die Gegenkraft von einem feststehenden Greiferfinger aufgebracht wird.

Die angetriebene Greiferbacke, d.h. der angetriebene Greiferfinger kann erfindungsgemäße über eine Führung so gelagert werden, dass der Greiferfinger gegen die Rotationsbewegung des Antriebs abgestützt wird. Die Quermomente auf den Greiferfinger, die über den Hebelarm zur Klemmkraft entstehen, werden über die Lagerung bzw. Führung so aufgenommen, dass sie das Antriebsmoment nicht beeinflussen. Die Linearbewegung der Greiferbacke kann beipielsweise von einer Spindel auf eine Mutter übertragen werden, die starr zur Greiferbacke angeordnet ist. Das Antriebsmoment wird als reines Moment, ohne einen Anteil von Axialkraft auf die Spindel übertragen. Für die Momentenübertragung auf die Spindel können z.B. Stirnräder oder ein Zahnriemen genutzt werden. Die Spindel kann beispielsweise mit zwei Radiallagern so im Greifergehäuse gelagert werden, dass sie axial frei beweglich ist. Eine axiale Abstützung der Spindel kann über ein Axiallager erfolgen, das über einen Biegebalken mit dem Gehäuse verbunden ist. Durch ein Aufbringen eines Antriebsmoments erfolgt eine lineare Verschiebung der Greiferbacke. Wenn diese einen Gegenstand berührt, wird zu diesem aufgrund des Antriebsmoments eine Klemmkraft erzeugt. Diese Klemmkraft stützt sich über die Spindel und dem Axiallager an dem Biegebalken ab, der das Axiallager mit der Gegenkraft d.h. der Lagerreaktionskraft, die genauso groß ist wie die Klemmkraft, gegen die Welle drückt. Eine Verformung des Biegebalkens kann beispielsweise mit daran angebrachten Dehnmessstreifen erkannt werden. Der Antriebsstrang kann nicht rücktreibbar gestaltet sein. Dies kann zum einem über die Steigung der Spindel und der Haftreibung in der Spindel-Mutter-Verbindung und zum anderen über die Reibungskraft des gesamten Antriebs, der an der Spindel anliegt, erfolgen. Die axiale Abstützung der Spindel nimmt die Klemmkraft auf, unabhängig davon, ob der Antriebsstrang verklemmt ist oder nicht.

In dieser Weise kann ein Greifer aufgebaut werden, bei dem der bewegliche Greiferfinger über eine Linearführung abgestützt wird.

Weiterhin kann der Greifer so aufbaut werden, dass zwei sich gegenüberliegende Greiferbacken oder Greiferfinger gegeneinander verfahren werden, wobei jeder Greiferfinger von einem eigenen Antriebsstrang angetrieben wird. An beiden Antriebssträngen kann dann die Klemmkraft separat gemessen werden.

Die Greiffingerlagerung kann ausgebildet sein, alle auf den ersten Greiferfinger einwirkenden Kräfte, die von der Klemmkraft verschieden sind, und sämtliche Momente, die an dem ersten Greiferfinger auftreten, aufzunehmen. Die Greiffingerlagerung kann insbesondere ausgebildet sein, alle auf den ersten Greiferfinger einwirkenden Kräfte, die von der Klemmkraft verschieden sind, und sämtliche Momente, die an dem ersten Greiferfinger auftreten, aufzunehmen, und zwar in Kombination mit einem Teil der Getriebelageranordnung, der alle von den in Ausrichtung der Klemmkraft verschiedenen Getriebelagerreaktionskräfte separat aufnimmt bzw. aufnehmen kann.

Im Allgemeinen, d.h. in den grundlegenden Ausführungen des Greifers sind die Greifflächen eben ausgebildet und derart ausgerichtet, dass die Klemmkraft senkrecht oder zumindest nahezu senkrecht zur Greiffläche in den jeweiligen Greiferfinger eingeleitet wird. Der jeweils bewegliche Greiferfinger ist dabei in Ausrichtung der Klemmkraft beweglich bezüglich des Greifergrundkörpers gelagert. Eine in Ausrichtung der Klemmkraft bewegliche Lagerung bedeutet, dass der Greiferfinger entgegen der Klemmkraftrichtung verstellbar ist, um den Greifer zum Erfassen von Objekten zu schließen und in Klemmkraftrichtung verstellbar ist, um den Greifer zum Loslassen von Objekten zu öffnen.

Aufgrund der Klemmkraft bei mittels des Greifers gegriffenem Objekt können dabei insbesondere wegen der Längserstreckung der Greiferfinger Momente induziert werden, welche von der Greiffingerlagerung aufgenommen werden. Es können beispielsweise aber auch Querkräfte, d.h. Kräfte, die senkrecht zur Ausrichtung der Klemmkraft orientiert sind, auftreten, die ebenfalls von der Greiffingerlagerung aufgenommen werden.

Die Getriebegliedlageranordnung kann ein von dem ersten Getriebegliedlager separates zweites Getriebegliedlager aufweisen, das ausgebildet ist, alle von der in Ausrichtung der Klemmkraft wirkenden Getriebelagerreaktionskraft verschiedenen Getriebelagerkräfte aufzunehmen. Das Getriebe soll eine Bewegung des zugordneten Greiferfingers in Ausrichtung der Klemmkraft zulassen. Dies bedeutet aber auch, dass das Getriebe alle anderen potentiellen Beweglichkeiten des Geiferfingers abstützen muss, insbesondere soweit diese nicht von der Greiffingerlagerung aufgenommen werden. Insoweit kann auch die Getriebegliedlageranordnung ausgebildet sein, wegen der Längserstreckung der Greiferfinger induziert Momente aufzunehmen, und/oder Querkräfte, d.h. Kräfte, die senkrecht zur Ausrichtung der Klemmkraft orientiert sind, aufzunehmen.

Das erste Getriebegliedlager kann über einen sich zumindest teilweise oder vollständig senkrecht zur Ausrichtung der Klemmkraft erstreckenden Biegeabschnitt mit dem Greifergrundkörper verbunden sein und der Biegeabschnitt kann dabei den Sensor aufweisen, der im Weiteren ausgebildet ist, die Getriebelagerreaktionskraft durch Aufnehmen einer durch die Klemmkraft verursachten Durchbiegung des Biegeabschnitts mittelbar zu erfassen.

Der Biegeabschnitt kann von einem separaten Steg gebildet werden, welcher das erste Getriebegliedlager mit dem Greifergrundkörper verbindet. Alternativ kann der Biegeabschnitt einteilig mit dem Getriebegliedlager und/oder insbesondere auch einteilig mit dem Greifergrundkörper ausgebildet sein.

Das Getriebe kann einen Spindeltrieb aufweisen, der als ein erstes Getriebeglied, das mit dem ersten Greiferfinger verbunden ist, eine Spindelmutter aufweist und als ein zweites Getriebeglied, das an dem Greifergrundkörper gelagert ist, eine Spindelwelle aufweist, auf der die Spindelmutter in Wellenlängserstreckung abläuft.

Die Spindelwelle kann mit ihrer Wellenlängserstreckung parallel zur Ausrichtung der Klemmkraft, die gemessen werden soll, angeordnet sein, derart, dass die Klemmkraft des ersten Greiferfingers über die Spindelmutter und über die Spindelwelle hinweg in axialer Richtung der Spindelwelle über das erste Getriebegliedlager in den Greifergrundkörper abgleitet wird.

Das erste Getriebegliedlager kann als ein reines Axiallager ausgebildet sein.

Das zweite Getriebegliedlager kann ausgebildet sein, die Spindelwelle axial verstellbar in dem Greifergrundkörper zu lagern. Indem das zweite Getriebegliedlager ausgebildet ist, die Spindelwelle axial verstellbar in dem Greifergrundkörper zu lagern, kann sichergestellt werden, dass alle auftretenden Axialkräfte vollständig an das erste Getriebegliedlager durchgeleitet werden und nur dort aufgefangen werden.

Der Greifer kann einen einzigen mittels des Getriebes motorisch angetriebenen ersten Greiferfinger aufweisen und der wenigstens eine zweite Greiferfinger kann dabei starr bezüglich des Greifergrundkörpers angeordnet sein. Ein Öffnen und/oder Schließen des Greifers erfolgt dabei ausschließlich durch eine Bewegung des ersten Greiferfingers, der zum Schließen des Greifers auf den starren zweiten Greiferfinger zubewegt werden kann und/oder zum Öffnen des Greifers von dem starren zweiten Greiferfinger wegbewegt werden kann.

Der Greifer kann zwei separate mittels jeweils eines eigenen Getriebes unabhängig voneinander motorisch angetriebene erste Greiferfinger aufweisen und dabei bezogen auf den jeweiligen ersten Greiferfinger der jeweils andere Greiferfinger den zweiten Greiferfinger bilden. In diesem Falle sind also beide, d.h. sowohl der erste Greiferfinger als auch der zweite Greiferfinger unabhängig voneinander beweglich am Greifergrundkörper gelagert. Die beiden Greiferfinger können dabei insbesondere symmetrische bzw. synchrone Bewegungen ausführen, derart, dass beide Greiferfinger entweder zum Schließen des Greifers gleichmäßig aufeinander zu bewegt werden oder zum Öffnen des Greifers gleichmäßig voneinander weg bewegt werden. Jeder Greiferfinger ist dabei jedoch durch eine eigene Greiferfingerlagerung und ein eigenes Getriebe gelagert und angetrieben. Die beiden Getriebe können jedoch wahlweise von einem gemeinsamen Motor oder von zwei separaten Motoren angetrieben sein.

Das Getriebe kann als ein selbsthaltendes oder zumindest selbsthemmendes Getriebe ausgebildet sein, derart, dass in einem antriebskraftlosen Zustand des Getriebes trotz an dem ersten Greiferfinger anstehender Klemmkraft das Getriebe in seiner Bewegung blockiert ist.

Das Getriebe kann als ein selbsthaltendes oder zumindest selbsthemmendes Getriebe ausgebildet sein und der Sensor kann dabei an einem Getriebegliedlager angeordnet sein, das im Getriebekraftfluss zwischen dem Greifergrundkörper und einem die Selbsthaltung oder Selbsthemmung des Getriebes verursachenden Getriebegliedpaar angeordnet ist.

Eine Selbsthemmung bedeutet im Zusammenhang mit der Erfindung, dass eine Bewegung des wenigstens einen Greiferfingers erschwert ist. Eine Selbsthaltung bedeutet, dass eine Bewegung des wenigstens einen Greiferfingers in Anbetracht der auftretenden Kräfte gar nicht mehr stattfinden kann. Wenn beispielsweise der Antriebsstrang des Greifers nicht rücktreibbar ist, d.h. die Greiferfinger bei Wegfall einer Antriebskraft sich nicht selbsttätig öffnen können, kann man von einer Selbsthaltung sprechen. Gegebenenfalls kann es jedoch schon ausreichend sein, wenn eine Bewegung des wenigstens einen Greiferfingers lediglich deutlich erschwert ist und insoweit das Getriebe nicht absolut selbsthaltend ist, aber zumindest selbsthemmend ist. Je nach Randbedingungen, wie beispielsweise einer Umgebungstemperatur oder auftretenden Klemmkräften oder Klemmmomenten, kann eine Selbsthemmung dann in eine Selbsthaltung übergehen. Die Selbsthaltung kann insoweit als eine Extremform der Selbsthemmung betrachtet werden.

Der Sensor kann in einer ersten Ausführungsvariante wenigstens einen Dehnmessstreifen aufweisen, der ausgebildet ist, die in Ausrichtung der Klemmkraft wirkende Getriebelagerreaktionskraft in Form von Oberflächendehnungen oder Oberflächenstauchungen an dem ersten Getriebegliedlager, insbesondere an dem Biegeabschnitt des ersten Getriebegliedlagers zu erfassen.

Der Sensor kann in einer zweiten Ausführungsvariante wenigstens einen Abstandssensor aufweisen, der ausgebildet ist, einen Abstand zwischen dem zweiten Getriebegliedlager und dem ersten Getriebegliedlager, insbesondere einem Biegeabschnitt des ersten Getriebegliedlagers zu erfassen. Der Abstandssensor kann beispielsweise ein optischer Sensor sein. Der optische Sensor kann dabei beispielsweise einen Lichtsender aufweisen und einen zugeordneten Lichtempfänger aufweisen, wobei jeweils der eine von Lichtsender und Lichtempfänger an dem zweiten Getriebegliedlager angeordnet ist und der jeweils andere von Lichtsender und Lichtempfänger an dem ersten Getriebegliedlager angeordnet ist. Das erste Getriebegliedlager, insbesondere der Biegeabschnitt des ersten Getriebegliedlagers kann auch als eine Reflexionsfläche ausgebildet sein, wobei sowohl Lichtsender und Lichtempfänger an dem zweiten Getriebegliedlager angeordnet sind.

Der Sensor kann in einer dritten Ausführungsvariante wenigstens einen Abstandssensor aufweisen, der ausgebildet ist, einen Abstand zwischen dem Greifergrundkörper und einer axialen Stirnseite des zweiten Getriebeglieds, insbesondere einer axialen Stirnseite einer Spindelwelle des Greifers zu erfassen. Der Abstandssensor kann auch in dieser Ausführungsvariante beispielsweise ein optischer Sensor sein. Der optische Sensor kann dabei beispielsweise einen Lichtsender aufweisen und einen zugeordneten Lichtempfänger aufweisen, wobei jeweils der eine von Lichtsender und Lichtempfänger an der axialen Stirnseite des zweiten Getriebeglieds angeordnet ist und der jeweils andere von Lichtsender und Lichtempfänger an dem Greifergrundkörper angeordnet ist. Die axiale Stirnseite des zweiten Getriebeglieds kann auch als eine Reflexionsfläche ausgebildet sein, wobei sowohl Lichtsender und Lichtempfänger an dem Greifergrundkörper angeordnet sind.

Ein konkretes Ausführungsbeispiel der Erfindung ist in der nachfolgenden Beschreibung unter Bezugnahme auf die beigefügten Figuren näher erläutert. Konkrete Merkmale dieses exemplarischen Ausführungsbeispiels können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Ansicht eines Industrieroboters in Art eines Sechsachs-Knickarmroboters, der einen erfindungsgemäßen Greifer an seinem Handflansch aufweisen kann;
- Fig. 2: eine perspektivische Ansicht eines beispielshaften Greifers in seiner Offenstellung;
- Fig. 3: eine perspektivische Ansicht des beispielshaften Greifers in seiner Schließstellung;
- Fig. 4: eine schematische Darstellung einer erfindungsgemäßen Greiferfingerlagerung mit einer ersten Ausführungsvariante eines Sensors an einem ersten Getriebegliedlager des Greifers; und
- Fig. 5: eine schematische Darstellung eines Paares von erfindungsgemäßen Greiferfingerlagerungen, die jeweils mit einem eigenen Sensor an einem separaten Getriebegliedlager versehen sind;
- Fig. 6: eine schematische Darstellung einer erfindungsgemäßen Greiferfingerlagerung mit einer zweiten Ausführungsvariante eines Sensors zwischen dem zweiten Getriebegliedlager und dem ersten Getriebegliedlager; und
- Fig. 7: eine schematische Darstellung einer erfindungsgemäßen Greiferfingerlagerung mit einer dritten Ausführungsvariante eines Sensors zwischen dem Greifergrundkörper und einer axialen Stirnseite des zweiten Getriebeglieds.

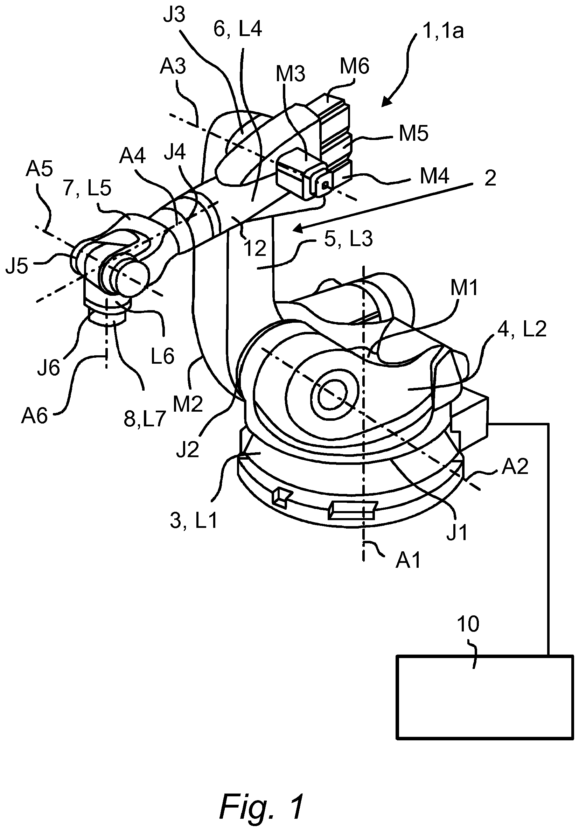

Die Fig. 1 zeigt einen Roboter 1, der einen Roboterarm 2 und eine Robotersteuerung 10 aufweist. Der Roboterarm 2 umfasst im Falle des vorliegenden Ausführungsbeispiels mehrere, nacheinander angeordnete und mittels Gelenke J1 bis J6 drehbar miteinander verbundene Glieder L1 bis L7.

Die Robotersteuerung 10 des Roboters 1 ist ausgebildet bzw. eingerichtet, ein Roboterprogramm auszuführen, durch welches die Gelenke J1 bis J6 des Roboterarms 2 gemäß des Roboterprogramms automatisiert oder in einem Handfahrbetrieb automatisch verstellt bzw. drehbewegt werden können. Dazu ist die Robotersteuerung 10 mit ansteuerbaren elektrischen Motoren M1 bis M6 verbunden, die ausgebildet sind, die Gelenke J1 bis J6 des Roboters 1 zu verstellen.

Bei den Gliedern L1 bis L7 handelt es sich im Falle des vorliegenden Ausführungsbeispiels eines Industrieroboters 1a um ein Gestell 3 und ein relativ zum Gestell 3 um eine vertikal verlaufende Achse A1 drehbar gelagertes Karussell 4. Weitere Glieder des Roboterarms 2 sind eine Schwinge 5, ein Armausleger 6 und eine vorzugsweise mehrachsige Roboterhand 7 mit einer als Werkzeugflansch 8 ausgeführten Befestigungsvorrichtung zum Befestigen eines erfindungsgemäßen Robotergreifers 11. Die Schwinge 5 ist am unteren Ende, d.h. an dem Gelenk J2 der Schwinge 5, das auch als Schwingenlagerkopf bezeichnet werden kann, auf dem Karussell 4 um eine vorzugsweise horizontale Drehachse A2 schwenkbar gelagert.

Am oberen Ende der Schwinge 5 ist an dem ersten Gelenk J3 der Schwinge 5 wiederum um eine ebenfalls vorzugsweise horizontale Achse A3 der Armausleger 6 schwenkbar gelagert. Dieser trägt endseitig die Roboterhand 7 mit ihren vorzugsweise drei Drehachsen A4, A5, A6. Die Gelenke J1 bis J6 sind durch jeweils einen der elektrischen Motoren M1 bis M6 über die Robotersteuerung 10 programmgesteuert antreibbar. Generell kann dazu zwischen jedem der Glieder L1 bis L7 und dem jeweils zugeordneten elektrischen Motoren M1 bis M6 ein Getriebe vorgesehen sein.

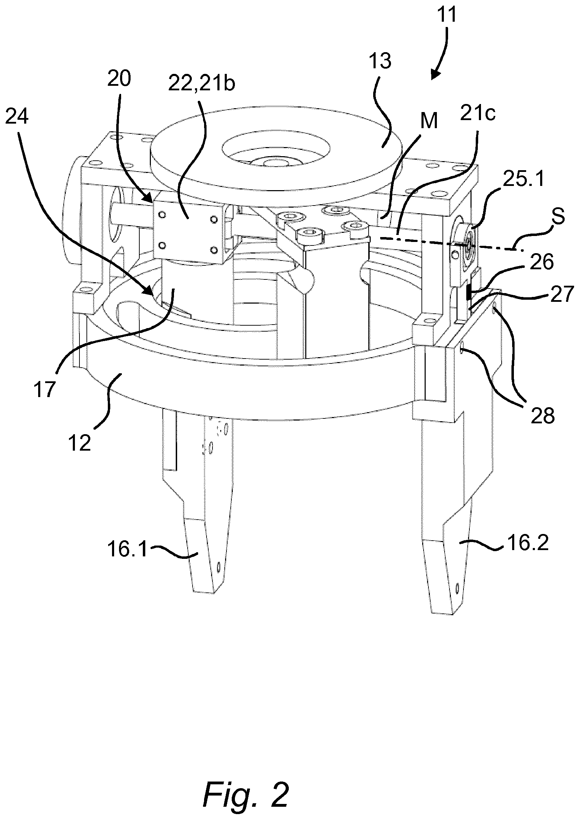

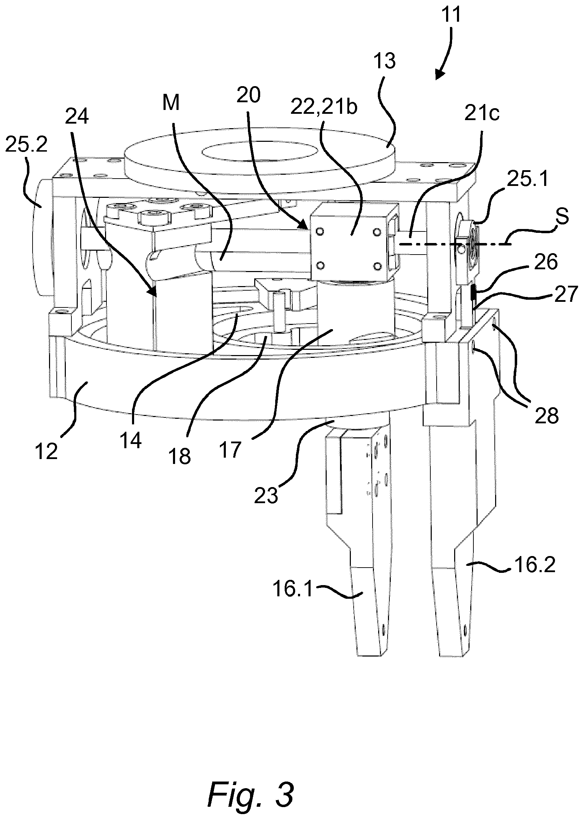

Die Fig. 2 und Fig. 3 zeigt eine beispielhafte Ausführungsform eines erfindungsgemäßen Robotergreifers 11, der einen ersten Greiferfinger 16.1 und einen zweiten Greiferfinger 16.2 aufweist. Der Robotergreifer 11 umfasst einen Greifergrundkörper 12, ein Basisglied 14, welches bezüglich des Greifergrundkörpers 12 drehbar gelagert ist, und ein Zwischenglied 18, welches bezüglich des Basisglieds 14 drehbar gelagert ist. Der Robotergreifer 11 umfasst außerdem einen Fingerträger 17, der den ersten Greiferfinger 16.1 trägt und der bezüglich des Zwischenglieds 18 drehbar gelagert ist. Der Robotergreifer 11 weist einen Anschlussflansch 13 auf, der zur Befestigung des Robotergreifers 11 an dem Werkzeugflansch 8 des Roboterarms 2 ausgebildet ist.

Der Robotergreifer 11 weist den ersten Greiferfinger 16.1 und den zweiten Greiferfinger 16.2 auf, sowie den Greifergrundkörper 12 und das Basisglied 14. Das Basisglied 14 ist mittels eines ersten Drehgelenks um eine erste Drehachse drehbar bezüglich des Greifergrundkörpers 12 gelagert. Das Zwischenglied 18 ist mittels eines zweiten Drehgelenks bezüglich des Basisglieds 14 drehbar gelagert und zwar um eine zweite Drehachse, die parallel zur ersten Drehachse ausgerichtet und in einem konstanten ersten Abstand von der ersten Drehachse angeordnet ist. Der Fingerträger 17, der den ersten Greiferfinger 16.1 trägt ist mittels eines dritten Drehgelenks bezüglich des Zwischenglieds 18 drehbar gelagert und zwar um eine dritte Drehachse, die parallel sowohl zur ersten Drehachse als auch zur zweiten Drehachse ausgerichtet und in einem konstanten zweiten Abstand von der zweiten Drehachse angeordnet ist.

In dieser Ausführungsform bilden die Glieder des Robotergreifers 11, welche durch den Greifergrundkörper 12, das Basisglied 14, das Zwischenglied 18 und dem Fingerträger 17 gebildet werden, eine kinematische Kette von Gliedern, die durch das erste Drehgelenk, das zweite Drehgelenk und das dritte Drehgelenk drehbar verstellt werden können. Die drei Drehachsen des ersten Drehgelenk, des zweiten Drehgelenks und des dritten Drehgelenks sind dabei parallel zueinander ausgerichtet. Im Ergebnis kann dadurch der auf dem Fingerträger 17 montierte erste Greiferfinger 16.1 in der Ebene der zweiten Stirnseite des Greifergrundkörpers 12 auf einer Bahn auf den feststehenden zweiten Greiferfinger 16.2 zu bewegt werden bzw. von diesem weg bewegt werden.

Wie in Fig. 2 und Fig. 3 ersichtlich ist, weist der erfindungsgemäße Robotergreifer 11 eine von dem ersten Drehgelenk, dem zweiten Drehgelenk und dem dritten Drehgelenk separate Antriebsvorrichtung 20 auf, die sich gegen den Greifergrundkörper 12 abstützt und die ausgebildet ist, den Fingerträger 17 relativ zum zweiten Greiferfinger 16.2 mit einer Antriebskraft zu verstellen, die über die Antriebsvorrichtung 20 in den Fingerträger 17 eingeleitet wird. Der zweite Greiferfinger 16.2 ist im Falle des gezeigten Ausführungsbeispiels bezüglich des Greifergrundkörpers 12 feststehend angeordnet.

Die Antriebsvorrichtung 20 weist in der dargestellten Ausführungsform einen Motor M und eine am Greifergrundkörper 12 um eine Spindelachse S drehbar gelagerte und von dem Motor M drehangetriebene Antriebsspindel, d.h. Spindelwelle 21c auf. Auf der Antriebsspindel bzw. der Spindelwelle 21c ist eine Abtriebs-Spindelmutter 22, 21b entlang der Spindelachse S linear verstellbar gelagert. Die Abtriebs-Spindelmutter 22, 21b ist zum Bewegen des Fingerträgers 17 durch ein Antreiben des Motors M an den Fingerträger 17 angekoppelt. Der Fingerträger 17 ist über eine Stange 23 mit der Abtriebs-Spindelmutter 22, 21b verbunden.

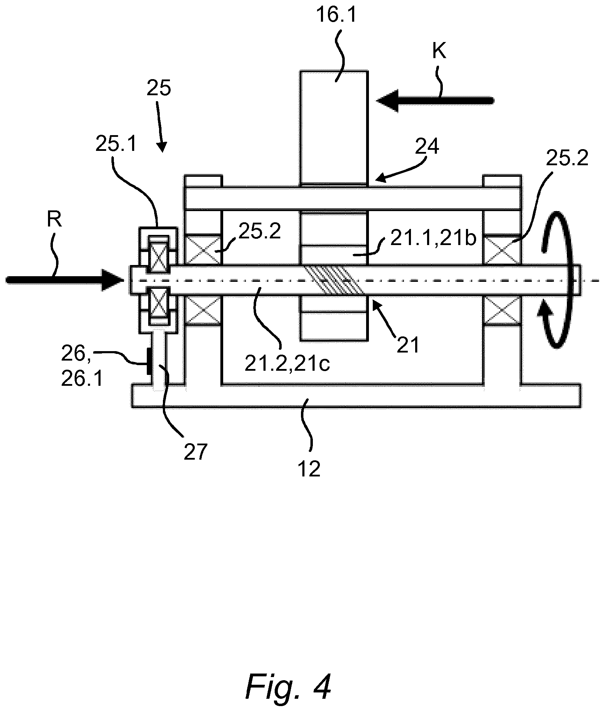

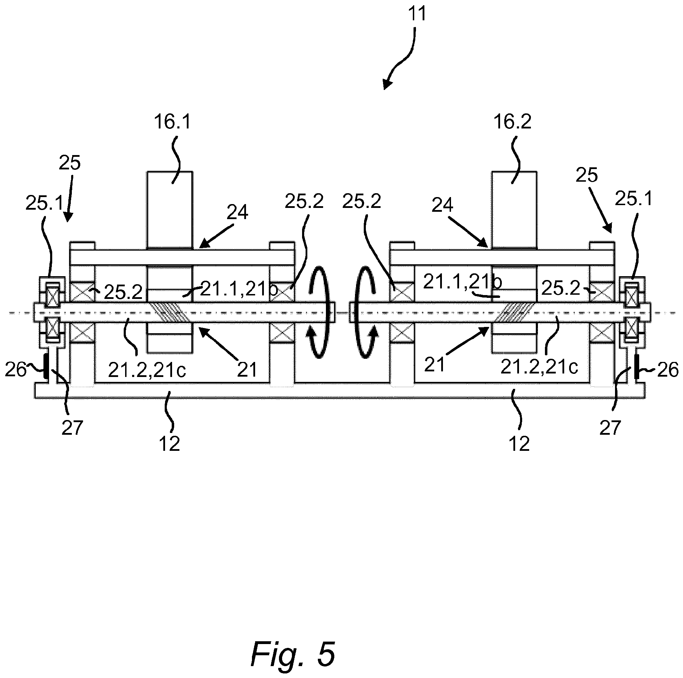

Nun bezugnehmend auf die verallgemeinerten schematischen Darstellungen der Fig. 4 und Fig. 5 weist der Greifer 11 demgemäß einen Greifergrundkörper 12, wenigstens einen bezüglich des Greifergrundkörpers 12 mittels einer Greiffingerlagerung 24 verstellbar gelagerten ersten Greiferfinger 16.1 und wenigstens einen mit dem ersten Greiferfinger 16.1 zusammenwirkenden zweiten Greiferfinger 16.2, sowie ein motorisch antreibbares Getriebe 21 auf, das ausgebildet ist, den wenigstens einen mittels der Greiffingerlagerung 24 verstellbar gelagerten ersten Greiferfinger 16.1 relativ zum Greifergrundkörper 12 und relativ zu dem wenigstens einen zweiten Greiferfinger 16.2 zu verstellen, derart, dass durch die Bewegung des ersten Greiferfingers 16.1 und der auf den Greiferfinger wirkenden Antriebskraft eine Klemmkraft K erzeugbar ist, durch welche ein Gegenstand von dem Greifer 11 klemmend gehalten werden kann, wobei das Getriebe 21 ein erstes Getriebeglied 21.1 aufweist, das mit dem ersten Greiferfinger 16.1 verbunden ist und ein zweites Getriebeglied 21.2 aufweist, das an dem Greifergrundkörper 12 gelagert ist und zwar mittels einer von der Greiffingerlagerung 24 separaten Getriebegliedlageranordnung 25, welche ein erstes Getriebegliedlager 25.1 aufweist, das ausgebildet ist, allein die in Ausrichtung der Klemmkraft K wirkende Getriebelagerreaktionskraft R separat aufzunehmen, wobei diesem ersten Getriebegliedlager 25.1 ein Sensor 26 zugeordnet ist, der ausgebildet ist, die Getriebelagerreaktionskraft R zu erfassen.

Die Greiffingerlagerung 24 ist ausgebildet, alle auf den ersten Greiferfinger 16.1 einwirkenden Kräfte, die von der Klemmkraft K verschieden sind, und sämtliche Momente, die an dem ersten Greiferfinger 16.l auftreten, aufzunehmen.

Die Getriebegliedlageranordnung 25 weist im Falle des vorliegenden Ausführungsbeispiels ein von dem ersten Getriebegliedlager 25.1 separates zweites Getriebegliedlager 25.2 auf, das ausgebildet ist, alle von der in Ausrichtung der Klemmkraft K wirkenden Getriebelagerreaktionskraft R verschiedenen Getriebelagerkräfte aufzunehmen.

Das erste Getriebegliedlager 25.1 ist über einen sich zumindest teilweise oder vollständig senkrecht zur Ausrichtung der Klemmkraft K erstreckenden Biegeabschnitt 27 mit dem Greifergrundkörper 12 verbunden und der Biegeabschnitt 27 weist dabei den Sensor 26 auf, der im Weiteren ausgebildet ist, die Getriebelagerreaktionskraft R durch Aufnehmen einer durch die Klemmkraft K verursachten Durchbiegung des Biegeabschnitts 27 mittelbar zu erfassen.

Das Getriebe 21 weist im Falle des vorliegenden Ausführungsbeispiels einen Spindeltrieb auf, der als ein erstes Getriebeglied 21.1, das mit dem ersten Greiferfinger 16.1 verbunden ist, eine Spindelmutter 21b aufweist und als ein zweites Getriebeglied 21.2, das an dem Greifergrundkörper 12 gelagert ist, eine Spindelwelle 21c aufweist, auf der die Spindelmutter 21b in Wellenlängserstreckung abläuft.

Die Spindelwelle 21c ist mit ihrer Wellenlängserstreckung parallel zur Ausrichtung der Klemmkraft K angeordnet, derart, dass die Klemmkraft K des ersten Greiferfingers 16.1 über die Spindelmutter 21b und über die Spindelwelle 21c hinweg in axialer Richtung der Spindelwelle 21c über das erste Getriebegliedlager 25.1 in den Greifergrundkörper 12 abgleitet wird.

Das erste Getriebegliedlager 25.1 ist im Falle des vorliegenden Ausführungsbeispiels als ein reines Axiallager ausgebildet.

Das zweite Getriebegliedlager 25.2 ist ausgebildet, die Spindelwelle 21c axial verstellbar an dem Greifergrundkörper 12 zu lagern.

Der Greifer 11 weist im Falle des Ausführungsbeispiels der Fig. 4 einen einzigen mittels des Getriebes 21 und des Motors M angetriebenen ersten Greiferfinger 16.1 auf. Dabei ist, wie in Fig. 2 ersichtlich, der wenigstens eine zweite Greiferfinger 16.2 starr bezüglich des Greifergrundkörpers 12 angeordnet und zwar mittels einer Verschraubung 28.

Im Falle des Ausführungsbeispiels der Fig. 5 weist der Greifer 11 zwei separate mittels jeweils eines eigenen Getriebes 21 unabhängig voneinander motorisch angetriebene Greiferfinger 16.1 und 16.2 auf. In dieser Ausführungsform weist der Greifer 11 ein motorisch antreibbares erstes Getriebe 21 auf, das ausgebildet ist, den wenigstens einen mittels der Greiffingerlagerung 24 verstellbar gelagerten ersten Greiferfinger 16.1 relativ zum Greifergrundkörper 12 und relativ zu dem wenigstens einen zweiten Greiferfinger 16.2 zu verstellen, derart, dass durch die Bewegung des ersten Greiferfingers 16.1 eine Klemmkraft K erzeugbar ist, durch welche ein Gegenstand von dem Greifer 11 klemmend gehalten werden kann, wobei das Getriebe 21 ein erstes Getriebeglied 21.1 aufweist, das mit dem ersten Greiferfinger 16.1 verbunden ist und ein zweites Getriebeglied 21.2 aufweist, das an dem Greifergrundkörper 12 gelagert ist und zwar mittels einer von der Greiffingerlagerung 24 separaten Getriebegliedlageranordnung 25, welche ein erstes Getriebegliedlager 25.1 aufweist, das ausgebildet ist, allein die in Ausrichtung der Klemmkraft K wirkende Getriebelagerreaktionskraft R separat aufzunehmen, wobei diesem ersten Getriebegliedlager 25.1 ein Sensor 26 zugeordnet ist, der ausgebildet ist, die Getriebelagerreaktionskraft R zu erfassen. In dieser Ausführungsform weist der Greifer 11 demgemäß aber auch ein motorisch antreibbares zweites Getriebe 21 auf, das ausgebildet ist, den wenigstens einen mittels der Greiffingerlagerung 24 verstellbar gelagerten zweiten Greiferfinger 16.2 relativ zum Greifergrundkörper 12 und relativ zu dem wenigstens einen ersten Greiferfinger 16.1 zu verstellen, derart, dass durch die Bewegung des zweiten Greiferfingers 16.2 eine Klemmkraft K erzeugbar ist, durch welche ein Gegenstand von dem Greifer 11 klemmend gehalten werden kann, wobei das zweite Getriebe 21 ein erstes Getriebeglied 21.1 aufweist, das mit dem zweiten Greiferfinger 16.2 verbunden ist und ein zweites Getriebeglied 21.2 aufweist, das an dem Greifergrundkörper 12 gelagert ist und zwar mittels einer von der Greiffingerlagerung 24 separaten Getriebegliedlageranordnung 25, welche ein erstes Getriebegliedlager 25.1 aufweist, das ausgebildet ist, allein die in Ausrichtung der Klemmkraft K wirkende Getriebelagerreaktionskraft R separat aufzunehmen, wobei diesem ersten Getriebegliedlager 25.1 ein weiterer Sensor 26 zugeordnet ist, der ausgebildet ist, die Getriebelagerreaktionskraft R zu erfassen.

Das Getriebe 21 kann als ein selbsthaltendes oder selbsthemmendes Getriebe 21 ausgebildet sein, derart, dass in einem antriebskraftlosen Zustand des Getriebes 21 trotz an dem ersten Greiferfinger 16.1 anstehender Klemmkraft das Getriebe 21 in seiner Bewegung blockiert ist.

Das Getriebe 21 kann insbesondere als ein selbsthemmendes oder selbsthaltendes Getriebe 21 ausgebildet sein, wobei der Sensor 26 an einem Getriebegliedlager 25.1 angeordnet ist, das im Getriebekraftfluss zwischen dem Greifergrundkörper 12 und einem die Selbsthemmung des Getriebes 21 verursachenden Getriebegliedpaar (Spindelmutter 21b und Spindelwelle 21c) angeordnet ist.

Der Sensor 26 kann generell wenigstens einen Dehnmessstreifen aufweisen, der ausgebildet ist, die in Ausrichtung der Klemmkraft K wirkende Getriebelagerreaktionskraft R in Form von Oberflächendehnungen oder Oberflächenstauchungen an dem ersten Getriebegliedlager 25.1, insbesondere an dem Biegeabschnitt 27 des ersten Getriebegliedlagers 25.1 zu erfassen.

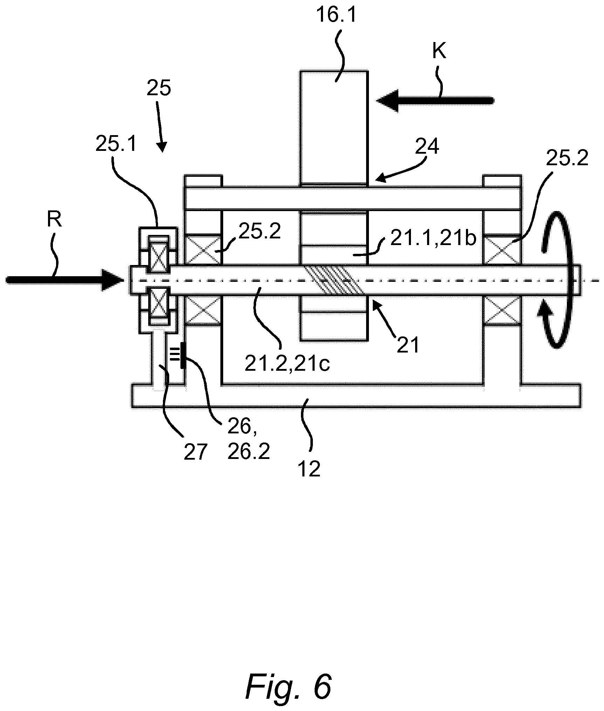

Die Fig. 6 zeigt schematisch eine Greiferfingerlagerung mit einer zweiten Ausführungsvariante, bei welcher der Sensor 26 wenigstens einen Abstandssensor 26.2 aufweist, der ausgebildet ist, einen Abstand zwischen dem zweiten Getriebegliedlager 25.2 und dem ersten Getriebegliedlager 25.1, insbesondere dem Biegeabschnitt 27 des ersten Getriebegliedlagers 25.1 zu erfassen.

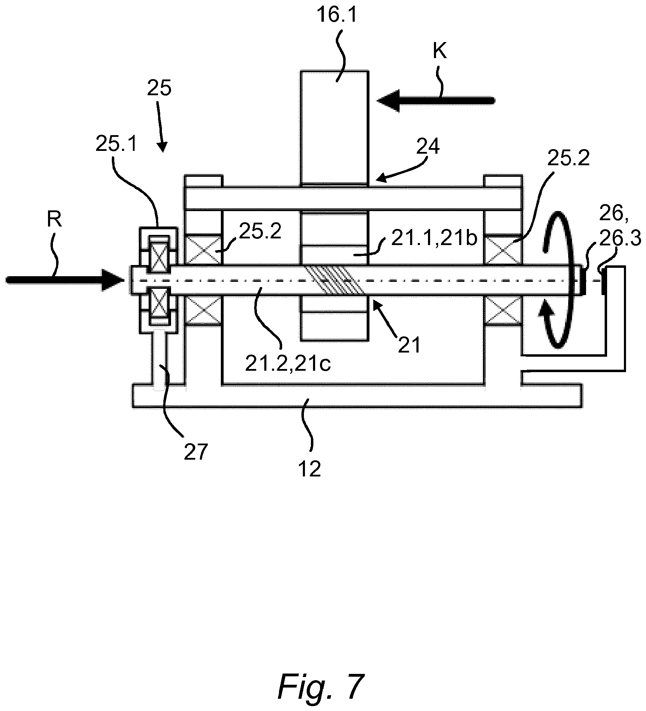

Die Fig. 7 zeigt schematisch eine Greiferfingerlagerung mit einer dritten Ausführungsvariante, bei welcher der Sensor 26 wenigstens einen Abstandssensor 26.3 aufweist, der ausgebildet ist, einen Abstand zwischen dem Greifergrundkörper 12 und einer axialen Stirnseite des zweiten Getriebeglieds 21.2, insbesondere einer axialen Stirnseite einer Spindelwelle 21c des Greifers 11 zu erfassen.

## Patentansprüche

1. Greifer, aufweisend einen Greifergrundkörper (12), wenigstens einen bezüglich des Greifergrundkörpers (12) mittels einer Greiffingerlagerung (24) verstellbar gelagerten ersten Greiferfinger (16.1) und wenigstens einen mit dem ersten Greiferfinger (16.1) zusammenwirkenden zweiten Greiferfinger (16.2), sowie ein motorisch antreibbares Getriebe (21), das ausgebildet ist, den wenigstens einen mittels der Greiffingerlagerung (24) verstellbar gelagerten ersten Greiferfinger (16.1) relativ zum Greifergrundkörper (12) und relativ zu dem wenigstens einen zweiten Greiferfinger (16.2) zu verstellen, derart, dass durch die Bewegung des ersten Greiferfingers (16.1) eine Klemmkraft (K) erzeugbar ist, durch welche ein Gegenstand von dem Greifer (11) klemmend gehalten werden kann,
wobei das Getriebe (21) ein erstes Getriebeglied (21.1) aufweist, das mit dem ersten Greiferfinger (16.1) verbunden ist und ein zweites Getriebeglied (21.2) aufweist, das an dem Greifergrundkörper (12) gelagert ist und zwar mittels einer von der Greiffingerlagerung (24) separaten Getriebegliedlageranordnung (25), welche ein erstes Getriebegliedlager (25.1) aufweist, das ausgebildet ist, allein die in Ausrichtung der Klemmkraft (K) wirkende Getriebelagerreaktionskraft (R) separat aufzunehmen, wobei der Getriebegliedlageranordnung (25) ein Sensor (26) zugeordnet ist, der ausgebildet ist, die Getriebelagerreaktionskraft (R) zu erfassen.

2. Greifer nach Anspruch 1, **dadurch gekennzeichnet, dass** die Getriebegliedlageranordnung (25) ein von dem ersten Getriebegliedlager (25.1) separates zweites Getriebegliedlager (25.2) aufweist, das ausgebildet ist, alle von der in Ausrichtung der Klemmkraft (K) wirkenden Getriebelagerreaktionskraft (R) verschiedenen Getriebelagerkräfte aufzunehmen.

3. Greifer nach Anspruch 1 oder 2, **dadurch gekennzeichnet, dass** die Greiffingerlagerung (24) ausgebildet ist, alle auf den ersten Greiferfinger (16.1) einwirkenden Kräfte, die von der Klemmkraft (K) verschieden sind, und sämtliche Momente, die an dem ersten Greiferfinger (16.1) auftreten, aufzunehmen, insbesondere in Kombination mit einem Teil der Getriebelageranordnung (25.2), der alle von den in Ausrichtung der Klemmkraft (K) verschiedenen Getriebelagerreaktionskräfte (R) separat aufnimmt.

4. Greifer nach einem der Ansprüche 1 bis 3, **dadurch gekennzeichnet, dass** das erste Getriebegliedlager (25.l) über einen sich zumindest teilweise oder vollständig senkrecht zur Ausrichtung der Klemmkraft (K) erstreckenden Biegeabschnitt (27) mit dem Greifergrundkörper (12) verbunden ist und der Biegeabschnitt (27) den Sensor (26) aufweist, der im Weiteren ausgebildet ist, die Getriebelagerreaktionskraft (R) durch Aufnehmen einer durch die Klemmkraft (K) verursachten Durchbiegung des Biegeabschnitts (27) mittelbar zu erfassen.

5. Greifer nach einem der Ansprüche 1 bis 4, **dadurch gekennzeichnet, dass** das Getriebe (21) einen Spindeltrieb
aufweist, der als ein erstes Getriebeglied (21.1), das mit dem ersten Greiferfinger (16.1) verbunden ist, eine Spindelmutter (21b) aufweist und als ein zweites Getriebeglied (21.2), das an dem Greifergrundkörper (12) gelagert ist, eine Spindelwelle (21c) aufweist, auf der die Spindelmutter (21b) in wellenlängserstreckung abläuft.

6. Greifer nach Anspruch 5, **dadurch gekennzeichnet, dass** die Spindelwelle (21c) mit ihrer Wellenlängserstreckung parallel zur Ausrichtung der Klemmkraft (K), die gemessen werden soll, angeordnet ist, derart, dass die Klemmkraft (K) des ersten Greiferfingers (16.1) über die Spindelmutter (21b) und über die Spindelwelle (21c) hinweg in axialer Richtung der Spindelwelle (21c) über das erste Getriebegliedlager (25.1) in den Greifergrundkörper (12) abgleitet wird.

7. Greifer nach Anspruch 6, **dadurch gekennzeichnet, dass** das erste Getriebegliedlager (25.1) als ein reines Axiallager ausgebildet ist.

8. Greifer nach einem der Ansprüche 5 bis 7, **dadurch gekennzeichnet, dass** das zweite Getriebegliedlager (25.2) ausgebildet ist, die Spindelwelle (21c) axial verstellbar in dem Greifergrundkörper (12) zu lagern.

9. Greifer nach einem der Ansprüche 1 bis 8, **dadurch gekennzeichnet, dass** der Greifer (11) einen einzigen mittels des Getriebes (21) motorisch angetriebenen ersten Greiferfinger (16.1) aufweist und der wenigstens eine zweite Greiferfinger (16.2) starr bezüglich des Greifergrundkörpers (12) angeordnet ist.

10. Greifer nach einem der Ansprüche 1 bis 8, **dadurch gekennzeichnet, dass** der Greifer (11) zwei separate mittels jeweils eines eigenen Getriebes (21) unabhängig voneinander motorisch angetriebene erste Greiferfinger (16.1) aufweist und dabei bezogen auf den jeweiligen ersten Greiferfinger (16.1) der jeweils andere Greiferfinger den zweiten Greiferfinger (16.2) bildet.

11. Greifer nach einem der Ansprüche 1 bis 10, **dadurch gekennzeichnet, dass** das Getriebe (21) als ein selbsthaltendes oder zumindest selbsthemmendes Getriebe (21) ausgebildet ist, derart, dass in einem antriebskraftlosen Zustand des Getriebes (21) trotz an dem ersten Greiferfinger (16.1) anstehender Klemmkraft (K) das Getriebe (21) in seiner Bewegung blockiert ist.

12. Greifer nach einem der Ansprüche 1 bis 11, **dadurch gekennzeichnet, dass** das Getriebe (21) als ein selbsthaltendes oder zumindest selbsthemmendes Getriebe (21) ausgebildet ist und der Sensor (26) an einem Getriebegliedlager (25.1) angeordnet ist, das im Getriebekraftfluss zwischen dem Greifergrundkörper (12) und einem die Selbsthaltung oder die Selbsthemmung des Getriebes (21) verursachenden Getriebegliedpaar angeordnet ist.

13. Greifer nach einem der Ansprüche 1 bis 12, **dadurch gekennzeichnet, dass** der Sensor (26) wenigstens einen Dehnmessstreifen (26.1) aufweist, der ausgebildet ist, die in Ausrichtung der Klemmkraft (K) wirkende Getriebelagerreaktionskraft (R) in Form von Oberflächendehnungen oder Oberflächenstauchungen an dem ersten Getriebegliedlager (25.1), insbesondere an dem Biegeabschnitt (27) des ersten Getriebegliedlagers (25.1) zu erfassen.

14. Greifer nach einem der Ansprüche 1 bis 12, **dadurch gekennzeichnet, dass** der Sensor (26) wenigstens einen Abstandssensor (26.2) aufweist, der ausgebildet ist, einen Abstand zwischen dem zweiten Getriebegliedlager (25.2) und dem ersten Getriebegliedlager (25.1), insbesondere dem Biegeabschnitt (27) des ersten Getriebegliedlagers (25.1) zu erfassen.

15. Greifer nach einem der Ansprüche 1 bis 12, **dadurch gekennzeichnet, dass** der Sensor (26) wenigstens einen Abstandssensor (26.3) aufweist, der ausgebildet ist, einen Abstand zwischen dem Greifergrundkörper (12) und einer axialen Stirnseite des zweiten Getriebeglieds (21.2), insbesondere einer axialen Stirnseite einer Spindelwelle (21c) des Greifers (11) zu erfassen.

## Claims

1. Gripper having a main gripper body (12), having at least one first gripper finger (16.1), which is mounted adjustable in relation to the main gripper body (12) by means of a gripping-finger mount (24), and having at least one second gripper finger (16.2), which interacts with the first gripper finger (16.1), and also having a motor-drivable gear mechanism (21), which is designed so that the at least one first gripper finger (16.1), which is mounted adjustable by means of the gripping-finger mount (24), is thereby adjusted relative to the main gripper body (12), and relative to the at least one second gripper finger (16.2), such that the movement of the first gripper finger (16.1) can generate a clamping force (K), by means of which an object can be held with clamping action by the gripper (11), wherein the gear mechanism (21) has a first gear-mechanism member (21.1), which is connected to the first gripper finger (16.1), and has a second gear-mechanism member (21.2), which is mounted on the main gripper body (12), to be precise by means of a gear-mechanism-member bearing arrangement (25), which is separate from the gripping-finger mount (24) and has a first gear-mechanism-member bearing (25.1), which is designed so that it separately absorbs only the gear-mechanism bearing reaction force (R), which acts in alignment with the clamping force (K), wherein the gear-mechanism-member bearing arrangement (25) is assigned a sensor (26), which is designed to sense the gear-mechanism bearing reaction force (R).

2. Gripper according to Claim 1, **characterized in that** the gear-mechanism-member bearing arrangement (25) has a second gear-mechanism-member bearing (25.2), which is separate from the first gear-mechanism-member bearing (25.1) and is designed so that it absorbs all the gear-mechanism bearing forces, which differ from the gear-mechanism bearing reaction force (R), which acts in alignment with the clamping force (K).

3. Gripper according to Claim 1 or 2, **characterized in that** the gripping-finger mount (24) is designed so that it absorbs all the forces which act on the first gripper finger (16.1) and differ from the clamping force (K) and all the moments which occur at the first gripping finger (16.1), in particular in combination with a part of the gear-mechanism bearing arrangement (25.2) that separately absorbs all the gear-mechanism bearing reaction forces (R), which differ in alignment with the clamping force (K) .

4. Gripper according to one of Claims 1 to 3, **characterized in that** the first gear-mechanism-member bearing (25.1) is connected to the main gripper body (12) via a bending portion (27), which extends at least partially or fully perpendicularly in relation to the orientation of the clamping force (K), and the bending portion (27) has the sensor (26), which is also designed to indirectly sense the gear-mechanism bearing reaction force (R) by recording a bending action of the bending portion (27) that is caused by the clamping force (K).

5. Gripper according to one of Claims 1 to 4, **characterized in that** the gear mechanism (21) has a spindle drive which, as a first gear-mechanism member (21.1) connected to the first gripper finger (16.1), has a spindle nut (21b) and, as a second gear-mechanism member (21.2) mounted on the main gripper body (12), has a spindle shaft (21c), the spindle nut (21b) running thereon in the shaft longitudinal extent.

6. Gripper according to Claim 5, **characterized in that** the spindle shaft (21c) has its longitudinal extent arranged parallel to the orientation of the clamping force (K), which should be measured, such that the clamping force (K) of the first gripper finger (16.1) is dissipated in the axial direction of the spindle shaft (21c), beyond the spindle nut (21b) and beyond the spindle shaft (21c), into the main gripper body (12) via the first gear-mechanism-member bearing (25.1).

7. Gripper according to Claim 6, **characterized in that** the first gear-mechanism-member bearing (25.1) is designed in the form of a purely axial bearing.

8. Gripper according to one of Claims 5 to 7, **characterized in that** the second gear-mechanism-member bearing (25.2) is designed to bear the spindle shaft (21c) axially adjustably in the main gripper body (12).

9. Gripper according to one of Claims 1 to 8, **characterized in that** the gripper (11) has a single first gripper finger (16.1), which is motor-driven by means of the gear mechanism (21), and the at least one second gripper finger (16.2) is arranged rigidly in relation to the main gripper body (12).

10. Gripper according to one of Claims 1 to 8, **characterized in that** the gripper (11) has two separate first gripper fingers (16.1), which are motor-driven independently of one another by means of a dedicated gear mechanism (21) in each case, and, dwelling here on the respective first gripper finger (16.1), the respectively other gripper finger forms the second gripper finger (16.2).

11. Gripper according to one of Claims 1 to 10, **characterized in that** the gear mechanism (21) is designed in the form of a self-holding or at least self-locking gear mechanism (21) such that, when the gear mechanism (21) is in a driving-force-free state, despite a clamping force (K) acting on the first gripper finger (16.1), the movement of the gear mechanism (21) is blocked.

12. Gripper according to one of Claims 1 to 11, **characterized in that** the gear mechanism (21) is designed in the form of a self-holding or at least self-locking gear mechanism (21) and the sensor (26) is arranged on a gear-mechanism-member bearing (25.1), which, as seen in relation to the flow of power in the gear mechanism, is arranged between the main gripper body (12) and a pair of gear-mechanism members which brings about the self-holding action or the self-locking action of the gear mechanism (21) .

13. Gripper according to one of Claims 1 to 12, **characterized in that** the sensor (26) has at least one strain gauge (26.1), which is designed to sense the gear-mechanism bearing reaction force (R), which acts in alignment with the clamping force (K), in the form of instances of surface expansion or surface compression on the first gear-mechanism-member bearing (25.1), in particular on the bending portion (27) of the first gear-mechanism-member bearing (25.1).

14. Gripper according to one of Claims 1 to 12, **characterized in that** the sensor (26) has at least one distance sensor (26.2), which is designed to sense a distance between the second gear-mechanism-member bearing (25.2) and the first gear-mechanism-member bearing (25.2), in particular the bending portion (27) of the first gear-mechanism-member bearing (25.1).

15. Gripper according to one of Claims 1 to 12, **characterized in that** the sensor (26) has at least one distance sensor (26.3), which is designed to sense a distance between the main gripper body (12) and an axial end side of the second gear-mechanism member (21.2), in particular an axial end side of a spindle shaft (21c) of the gripper (11).

## Revendications

1. Preneur, présentant un corps de base de preneur (12), au moins un premier doigt de preneur (16.1) monté de manière réglable par rapport au corps de base de preneur (12) au moyen d'un palier de doigt de preneur (24) et au moins un deuxième doigt de preneur (16.2) coopérant avec le premier doigt de preneur (16.1), ainsi qu'une transmission (21) entraînable par moteur, qui est configurée pour régler l'au moins un premier doigt de preneur (16.1), monté de manière réglable au moyen du palier de doigt de preneur (24), par rapport au corps de base de preneur (12) et par rapport à l'au moins un deuxième doigt de preneur (16.2), de telle sorte qu'une force de serrage (K) peut être produite par le mouvement du premier doigt de preneur (16.1), par laquelle un objet peut être maintenu par serrage par le preneur (11),
la transmission (21) présentant un premier élément de transmission (21.1) qui est relié au premier doigt de preneur (16.1) et présentant un deuxième élément de transmission (21.2) qui est monté sur le corps de base de preneur (12), et ce au moyen d'un agencement de palier d'élément de transmission (25) séparé du palier de doigt de preneur (24), lequel présente un premier palier d'élément de transmission (25.1) qui est configuré pour absorber séparément seulement la force de réaction de palier de transmission (R) agissant dans l'orientation de la force de serrage (K), l'agencement de palier d'élément de transmission (25) étant associé à un capteur (26), qui est configuré pour détecter la force de réaction de palier de transmission (R).

2. Preneur selon la revendication 1, **caractérisé en ce que** l'agencement de palier d'élément de transmission (25) présente un deuxième palier d'élément de transmission (25.2) séparé du premier palier d'élément de transmission (25.1), qui est configuré pour absorber toutes les forces de palier de transmission différentes de la force de réaction de palier de transmission (R) agissant dans l'orientation de la force de serrage (K).

3. Preneur selon la revendication 1 ou 2, **caractérisé en ce que** le palier de doigt de preneur (24) est configuré pour absorber toutes les forces agissant sur le premier doigt de preneur (16.1) qui sont différentes de la force de serrage (K) et tous les moments qui se produisent sur le premier doigt de preneur (16.1), notamment en combinaison avec une partie de l'agencement de palier de transmission (25.2), qui absorbe séparément toutes les forces de réaction de palier de transmission (R) différentes dans l'orientation de la force de serrage (K) .

4. Preneur selon l'une quelconque des revendications 1 à 3, **caractérisé en ce que** le premier palier d'élément de transmission (25.1) est relié au corps de base de preneur (12) par l'intermédiaire d'une section de flexion (27) qui s'étend au moins partiellement ou entièrement perpendiculairement à l'orientation de la force de serrage (K), et la section de flexion (27) présente le capteur (26) qui est en outre configuré pour détecter indirectement la force de réaction de palier de transmission (R) par absorption d'une flexion de la section de flexion (27) provoquée par la force de serrage (K) .

5. Preneur selon l'une quelconque des revendications 1 à 4, **caractérisé en ce que** la transmission (21) présente un mécanisme à broche qui présente, en tant que premier élément de transmission (21.1) qui est relié au premier doigt de preneur (16.1), un écrou de broche (21b) et, en tant que deuxième élément de transmission (21.2) qui est monté sur le corps de base de preneur (12), un arbre de broche (21c) sur lequel l'écrou de broche (21b) se déplace dans l'extension longitudinale de l'arbre.

6. Preneur selon la revendication 5, **caractérisé en ce que** l'arbre de broche (21c) est agencé avec son extension longitudinale d'arbre parallèlement à l'orientation de la force de serrage (K) qui doit être mesurée, de telle sorte que la force de serrage (K) du premier doigt de preneur (16.1) est dérivée par l'intermédiaire de l'écrou de broche (21b) et par l'intermédiaire de l'arbre de broche (21c) dans la direction axiale de l'arbre de broche (21c) par l'intermédiaire du premier palier d'élément de transmission (25.1) dans le corps de base de preneur (12).

7. Preneur selon la revendication 6, **caractérisé en ce que** le premier palier d'élément de transmission (25.1) est configuré sous la forme d'un palier axial pur.

8. Preneur selon l'une quelconque des revendications 5 à 7, **caractérisé en ce que** le deuxième palier d'élément de transmission (25.2) est configuré pour monter l'arbre de broche (21c) de manière réglable axialement dans le corps de base de preneur (12).

9. Preneur selon l'une quelconque des revendications 1 à 8, **caractérisé en ce que** le preneur (11) présente un seul premier doigt de preneur (16.1) entraîné par moteur au moyen de la transmission (21) et l'au moins un deuxième doigt de preneur (16.2) est agencé de manière rigide par rapport au corps de base de preneur (12).

10. Preneur selon l'une quelconque des revendications 1 à 8, **caractérisé en ce que** le preneur (11) présente deux premiers doigts de preneur (16.1) séparés, entraînés par moteur indépendamment l'un de l'autre au moyen respectivement d'une transmission (21) propre et l'autre doigt de preneur respectif forme le deuxième doigt de preneur (16.2) par rapport au premier doigt de preneur (16.1) respectif.

11. Preneur selon l'une quelconque des revendications 1 à 10, **caractérisé en ce que** la transmission (21) est configurée sous la forme d'une transmission (21) automaintenue ou au moins autobloquante, de telle sorte que dans un état sans force d'entraînement de la transmission (21), la transmission (21) est bloquée dans son mouvement malgré la force de serrage (K) appliquée au premier doigt de preneur (16.1).

12. Preneur selon l'une quelconque des revendications 1 à 11, **caractérisé en ce que** la transmission (21) est configurée sous la forme d'une transmission (21) automaintenue ou au moins autobloquante et le capteur (26) est agencé sur un palier d'élément de transmission (25.1) qui est agencé dans le flux de force de transmission entre le corps de base de preneur (12) et une paire d'éléments de transmission provoquant l'automaintien ou l'autoblocage de la transmission (21).

13. Preneur selon l'une quelconque des revendications 1 à 12, **caractérisé en ce que** le capteur (26) présente au moins une jauge de contrainte (26.1) qui est configurée pour détecter la force de réaction de palier de transmission (R) agissant dans l'orientation de la force de serrage (K) sous forme d'allongements de surface ou de compressions de surface sur le premier palier d'élément de transmission (25.1), notamment sur la section de flexion (27) du premier palier d'élément de transmission (25.1).

14. Preneur selon l'une quelconque des revendications 1 à 12, **caractérisé en ce que** le capteur (26) présente au moins un capteur de distance (26.2) qui est configuré pour détecter une distance entre le deuxième palier d'élément de transmission (25.2) et le premier palier d'élément de transmission (25.1), notamment la section de flexion (27) du premier palier d'élément de transmission (25.1).

15. Preneur selon l'une quelconque des revendications 1 à 12, **caractérisé en ce que** le capteur (26) présente au moins un capteur de distance (26.3) qui est configuré pour détecter une distance entre le corps de base de preneur (12) et un côté frontal axial du deuxième élément de transmission (21.2), notamment un côté frontal axial d'un arbre de broche (21c) du preneur (11).
